# EUROPÄISCHE PATENTSCHRIFT

(11) **EP 3 328 951 B1**
(45) Veröffentlichungstag und Bekanntmachung des Hinweises auf die Patenterteilung: **21.04.2021**
(21) Anmeldenummer: 16736833.1
(22) Anmeldetag: 05.07.2016
(51) Int. Cl.: C09J 5/02, C09J 5/04, C09J 7/00

(54) **REAKTIVES KLEBSTOFFFILM-SYSTEM ZUR VERKLEBUNG UNPOLARER OBERFLÄCHEN**
REACTIVE ADHESIVE FILM SYSTEM FOR GLUING TOGETHER NON-POLAR SURFACES
SYSTÈME DE FILMS ADHÉSIFS RÉACTIFS POUR COLLER DES SURFACES NON POLAIRES

(30) Priorität: 31.07.2015 DE 102015009764
(43) Veröffentlichungstag der Anmeldung: 06.06.2018
(73) Patentinhaber: tesa SE, 22848 Norderstedt (DE)
(72) Erfinder: CLARET, Elma, 13100 Aix-en-Provence (FR); DIETZE, Sebastian, 24568 Kaltenkirchen (DE); HANNEMANN, Frank, 22047 Hamburg (DE); KOOPS, Arne, 23881 Neu-Lankau (DE); SCHÜMANN, Uwe, 25421 Pinneberg (DE)
(74) Vertreter: tesa SE
(86) Internationale Anmeldenummer: PCT/EP2016/065882
(87) Internationale Veröffentlichungsnummer: WO 2017/021085

(56) Entgegenhaltungen:
- EP-A2- 1 132 148
- WO-A1-2014/202402
- WO-A2-2012/152710
- DATABASE WPI Week 199536 Thomson Scientific, London, GB; AN 1995-273065 XP002761792, & JP H07 173441 A (FUJIMORI IND CO LTD) 11. Juli 1995 (1995-07-11)

## Beschreibung

### Technisches Gebiet der Erfindung

Die vorliegende Erfindung betrifft ein reaktives Klebstofffilm-System, umfassend einen ersten reaktiven Klebstofffilm (A) und einen zweiten reaktiven Klebstofffilm (B); die Verwendung des hierin beschriebenen reaktiven Klebstoffilm-Systems zur Verklebung von Materialien mit unpolaren Oberflächen; Verbundkörper, umfassend das reaktive Klebstofffilm-System; sowie Verfahren zur Herstellung des reaktiven Klebstofffilm-Systems.

Ferner wird ein Verfahren zur Erhöhung der adhäsiven Eigenschaften des reaktiven Klebstofffilm-Systems auf unpolaren Untergründen beschrieben.

### Stand der Technik

2-Komponenten-Klebesysteme sind seit vielen Jahren bekannt und in der Fachliteratur ausführlich beschrieben. In diesen Systemen wird ein aus zwei Komponenten bestehendes Klebstoff-System auf die zu verklebenden Teile aufgetragen, wobei üblicherweise zwei flüssige Komponenten zum Einsatz kommen. Derartige flüssige Systeme sind jedoch nachteilig, da ihre Anwendung oft unsauber erfolgt und ihr Einsatz vor allem bei großflächigen Verklebungen und auf unebenen Flächen ungeeignet ist. Des Weiteren ist für die Aktivierung solcher Klebstoff-Systeme häufig eine erhöhte Temperatur notwendig, was vor allem für temperaturempfindliche Substrate problematisch ist. Ferner ist die Lagerstabilität solcher flüssigen 2-KomponentenKlebstoff-Systeme kritisch. Darüber hinaus kommt es durch Erschütterungen nach einem vollständigen Aushärten herkömmlicher 2-Komponenten-Klebesysteme im Bereich der Verklebungen häufig zu Rissen oder Brüchen.

Die WO 2014/202402 A1 adressiert diese Probleme und stellt ein reaktives 2-Komponenten-Klebesystem in Filmform bereit. Zur gezielten Verklebung von Materialien mit unpolaren Oberflächen ist jedoch auch dieses Klebesystem nicht geeignet. So kommt es bei niederenergetischen Untergründen wie Polyethylen und Polypropylen sehr schnell zu einem adhäsiven Versagen zwischen dem Substrat und dem Klebesystem, da nur äußerst geringe Klebfestigkeiten beobachtet werden.

Die WO 2012/152715 A1 beschäftigt sich mit der Erhöhung der adhäsiven Eigenschaften von Haftklebemassen auf Untergründen. Hierzu wird die Oberfläche einer Haftklebmassenschicht vor dem Verkleben mit einem Substratplasma behandelt. Die WO 2012/152715 A1 beobachtet jedoch, dass auf unpolaren Untergründen wie Polyethylen oder Polypropylen keine Steigerung der adhäsiven Eigenschaften der plasmabehandelten Haftklebmasse beobachtet wird.

### Aufgabe der vorliegenden Erfindung

Vor diesem Hintergrund besteht ein Bedarf an Klebstoff-Systemen, die auf unpolaren Oberflächen wie Polyethylen oder Polypropylen erhöhte Klebfestigkeiten ausbilden.

Zur Lösung dieses Problems schlägt die vorliegende Erfindung ein reaktives Klebstofffilm-System vor, mit einem ersten reaktiven Klebstofffilm (A) und einem zweiten reaktiven Klebstofffilm (B), wobei wenigstens eine Außenseite des ersten reaktiven Klebstofffilms (A) und/oder des zweiten reaktiven Klebstofffilms (B) plasmabehandelt ist.

Durch die Bereitstellung des Klebstofffilm-Systems in Filmform wird eine einfache Handhabung gewährleistet. Insbesondere wird ein Verrutschen bei der Anwendung auf den zu verklebenden Substraten vermieden und eine genauere Verklebung als bei flüssigen Klebstoffsystemen ermöglicht. Durch die Plasmabehandlung der wenigstens einen Außenseite des ersten reaktiven Klebstofffilms (A) und/oder des zweiten reaktiven Klebstofffilms (B) ergibt sich eine überraschend hohe Klebfestigkeit des hierin beschriebenen Klebstoff-Systems auf unpolaren Oberflächen wie Polyethylen oder Polypropylen.

### Beschreibung der Erfindung

Die vorliegende Erfindung betrifft ein reaktives Klebstofffilm-System, umfassend: wenigstens einen ersten reaktiven Klebstofffilm (A), mit (a) einer polymeren Filmbildner-Matrix, (b) mindestens einem reaktiven Monomer oder Reaktivharz und (c) einem Initiator, insbesondere Radikalinitiator; und wenigstens einen zweiten reaktiven Klebstofffilm (B), mit (a) einer polymeren Filmbildner-Matrix, (b) mindestens einem reaktiven Monomer oder Reaktivharz und (c) einem Aktivator; wobei der erste und der zweite reaktive Klebstofffilm jeweils eine Außenseite und eine Innenseite aufweisen und die Innenseite eines ersten reaktiven Klebstofffilms mit der Innenseite eines zweiten reaktiven Klebstofffilms in Kontakt steht oder in Kontakt gebracht werden kann; und wobei die Außenseite wenigstens eines ersten und/oder eines zweiten reaktiven Klebstofffilms plasmabehandelt ist. Diese plasmabehandelte Außenseite ist dazu bestimmt, mit der Oberfläche eines Materials, bevorzugt mit einer unpolaren Oberfläche eines Materials wie Polyethylen oder Polypropylen eine adhäsive Bindung einzugehen.

Überraschenderweise wurde befunden, dass durch die Plasmabehandlung der Außenseite wenigstens eines ersten und/oder eines zweiten reaktiven Klebstofffilms des hierin beschriebenen Klebstofffilm-Systems besonders gute Klebfestigkeiten auch gegenüber unpolaren Oberflächen wie Polyethylen oder Polypropylen erzeugt werden können.

In einem zweiten Aspekt betrifft die vorliegende Erfindung daher die Verwendung des reaktiven Klebstofffilm-Systems wie hierin beschrieben zur Verklebung von diversen Materialien wie Holz, Metall, Glas und/oder Kunststoffen. In einer bevorzugten Ausführungsform der Erfindung wird das hierin beschriebene Klebstofffilm-System zur Verklebung von Materialien mit unpolaren Oberflächen, bevorzugt zur Verklebung von Polyethylen oder Polypropylen, verwendet. In einer besonders bevorzugten Ausführungsform der Erfindung wird die zu verklebende Oberfläche, insbesondere die zu verklebende unpolare Oberfläche, des zur Verklebung vorgesehenen Materials ebenfalls plasmabehandelt. Bevorzugt wird diese plasmabehandelte Oberfläche des zu verklebenden Materials mit der plasmabehandelten Außenseite des ersten und/oder zweiten reaktiven Klebstofffilms des reaktiven Klebstofffilm-Systems der vorliegenden Erfindung in Verbindung gebracht.

Die vorliegende Erfindung betrifft insofern in einem weiteren Aspekt der Erfindung Verbundkörper, umfassend das reaktive Klebstofffilm-System der hierin beschriebenen Erfindung. Ein "Verbundkörper" wie hierin verwendet ist jeder dreidimensionale Gegenstand, in dem ein erfindungsgemäßes reaktives Klebstofffilm-System über eine plasmabehandelte Außenseite eines ersten reaktiven Klebstofffilms (A) oder über eine plasmabehandelte Außenseite eines zweiten reaktiven Klebstofffilms (B) mit der Oberfläche eines zu verklebenden Gegenstandes verbunden ist. In einem bevorzugten Aspekt betrifft die vorliegende Erfindung Verbundkörper, bei denen die plasmabehandelte Außenseite des wenigstens einen reaktiven Klebstofffilms mit einer plasmabehandelten Oberfläche des zu verklebenden Gegenstandes in Kontakt steht, das heißt, dass die Oberfläche des zu verklebenden Materials mit der plasmabehandelten Außenseite des reaktiven Klebstofffilms verbunden wurde, so dass sich eine Verklebung ausbilden konnte. Bevorzugt handelt es sich bei der mit der plasmabehandelten Außenseite des wenigstens einen reaktiven Klebstofffilms in Kontakt stehenden Oberfläche um eine unpolare Oberfläche wie Polyethylen oder Polypropylen.

Überraschender Weise wurde gefunden, dass sich hohe Klebfestigkeiten auch gegenüber unpolaren Oberflächen ausbilden, wenn die plasmabehandelte Außenseite des wenigstens einen reaktiven Klebstofffilms mit dieser unpolaren Oberfläche in Kontakt gebracht wird. Ohne sich an diese theoretische Betrachtung binden zu wollen, gehen die Erfinder davon aus, dass die hohen Klebkräfte gegenüber unpolaren Oberflächen möglicherweise auf kovalente Bindung zwischen der zu verklebenden Oberfläche und der plasmabehandelten Außenseite des reaktiven Klebstofffilms (A) beziehungsweise (B) zurückzuführen sind. Diese Bindungen sind dabei offensichtlich so stark, dass ein Adhäsionsbruch, d.h. ein Lösen der Verbindung im Bereich der Grenzfläche Substrat/Klebstofffilm-System vermieden werden kann. Gleichzeitig bildet das hierin beschriebene reaktive Klebstofffilm-System nach dem in-Kontakt-Bringen der Klebstofffilme (A) und (B) über ihre Innenseiten ein Netzwerk von Bindungen aus, das sich durch das gesamte Klebstofffilm System durchzieht. Hierdurch wird dem reaktiven Klebstofffilm-System eine besondere Festigkeit verliehen, so dass auch Kohäsionsbrüche, d.h. ein Versagen der Klebstoffmatrix, unterdrückt werden. Stattdessen ist der durch das reaktive Klebstofffilm-System erzielbare Klebeverbund derart stabil auch im Falle einer Verklebung von unpolaren Gegenständen wie Polyethylen oder Polypropylen, dass es zu einem Materialbruch der verklebten unpolaren Materialien wie Polyethylen oder Polypropylen kommt.

Ein weiterer Aspekt der vorliegenden Erfindung betrifft schließlich ein Verfahren zur Herstellung des erfindungsgemäßen reaktiven Klebstofffilm-Systems umfassend die folgenden Schritte.
(i) das Bereitstellen wenigstens eines ersten reaktiven Klebstofffilms (A) mit (a) einer polymeren Filmbildner-Matrix, (b) mindestens einem reaktiven Monomer oder Reaktivharz und (c) einem Initiator, insbesondere Radikalinitiator;
(ii) das Bereitstellen wenigstens eines zweiten reaktiven Klebstofffilms (B), mit (a) einer polymeren Filmbildner-Matrix, (b) mindestens einem reaktiven Monomer oder Reaktivharz und (c) einem Aktivator; sowie
(iii) das Plasmabehandeln einer Außenseite wenigstens eines ersten reaktiven Klebstofffilms (A) und/oder eines zweiten reaktiven Klebstofffilms (B).

In einer bevorzugten Ausführungsform der Erfindung ist die plasmabehandelte Außenseite des wenigstens einen ersten reaktiven Klebstofffilms (A) und/oder des wenigstens einen zweiten reaktiven Klebstofffilms (B) dafür vorgesehen, mit der Oberfläche, insbesondere mit einer unpolaren Oberfläche des zu verklebenden Substrates in Kontakt gebracht zu werden.

In einer weiteren, bevorzugten Ausführungsform umfassen die Schritte (i) und (ii), das heißt die Schritte des Bereitstellens der reaktiven Klebstofffilme (A) und (B), die folgenden Unterschritte.
a. Auflösen und/oder Feinverteilen der Inhaltsstoffe in einem oder mehreren Lösemittel(n) und/oder Wasser,
b. Mischen der aufgelösten oder feinverteilten Inhaltsstoffe,
c. Beschichten eines Trennliners oder -papiers, eines Trägermaterials oder eines Haftklebstoffs mit der Mischung aufgelöster oder verteilter Inhaltsstoffe nach Schritt b,
d. Verdunsten des Lösemittels und/oder Wassers und
e. Gegebenenfalls Aufwickeln des reaktiven Klebstofffilms zu einer Rolle,
wobei die Inhaltsstoffe in Schritt (i) eine polymere Filmbildner-Matrix (a), mindestens ein reaktives Monomer oder Reaktivharz (b), sowie einen Initiator, insbesondere einen Radikalinitiator (c) sowie gegebenenfalls weitere Additive und/oder Hilfsstoffe umfassen; und wobei die Inhaltsstoffe in Schritt (ii) eine polymere Filmbildner-Matrix (a), mindestens ein reaktives Monomer oder Reaktivharz (b), sowie einen Aktivator (c), sowie gegebenenfalls weitere Additive und/oder Hilfsstoffe umfassen.

Besonders bevorzugt wird Schritt (iii) mit Atmosphärendruckplasma durchgeführt.

Nachfolgend werden die Komponenten des erfindungsgemäßen Klebstofffilm-Systems und weitere Aspekte der vorliegenden Erfindung näher beschrieben.

### Polymere Filmbildner-Matrix

Die erfindungsgemäßen Klebstofffilme bestehen grundsätzlich aus einer Matrix, die nachfolgend polymere Filmbildner-Matrix genannt wird, in der die reaktiven, zu polymerisierenden Monomere und/oder Reaktivharze enthalten sind. Aufgabe dieser Matrix ist ein inertes Grundgerüst für die reaktiven Monomere und/oder Klebharze zu bilden, so dass diese nicht - wie im Stand der Technik - flüssig vorliegen und damit die genannten Probleme auslösen können, sondern in einem Film oder einer Folie eingelagert sind. Auf diese Art und Weise wird eine einfachere Handhabung gewährleistet.

Inert bedeutet in diesem Zusammenhang, dass die reaktiven Monomere und/oder Reaktivharze unter geeignet gewählten Bedingungen (z. B. bei ausreichend geringen Temperaturen) im Wesentlichen nicht mit der polymeren Filmbildner-Matrix reagieren.

Geeignete Filmbildner-Matrices zur Verwendung in der vorliegenden Erfindung sind vorzugsweise ausgewählt aus der folgenden Liste: ein thermoplastisches Polymer, wie z.B. ein Polyester bzw. Copolyester, ein Polyamid bzw. Copolyamid, ein Polyacrylsäureester, ein Acrylsäureester-Copolymer, ein Polymethacrylsäureester, ein Methacrylsäureester-Copolymer, thermoplastische Polyurethane sowie chemisch oder physikalisch vernetzte Stoffe der zuvor genannten Verbindungen. Darüber hinaus können auch Blends aus verschiedenen thermoplastischen Polymeren eingesetzt werden.

Weiterhin sind auch Elastomere und thermoplastische Elastomere alleinig oder im Gemisch als polymere Filmbildner-Matrix denkbar. Bevorzugt werden thermoplastische Polymere, insbesondere semikristalline.

Besonders bevorzugt sind thermoplastische Polymere mit Erweichungstemperaturen kleiner als 100°C. In diesem Zusammenhang steht der Begriff Erweichungspunkt für die Temperatur, ab der das thermoplastische Granulat mit sich selbst verklebt. Wenn es sich bei dem Bestandteil der polymeren Filmbildner-Matrix um ein semikristallines thermoplastisches Polymer handelt, dann weist es sehr bevorzugt neben seiner Erweichungstemperatur (die mit dem Schmelzen der Kristallite zusammenhängt) eine Glasübergangstemperatur von höchstens 25 °C, bevorzugt höchstens 0 °C auf.

In einer bevorzugten, erfindungsgemäßen Ausführungsform wird ein thermoplastisches Polyurethan eingesetzt. Vorzugsweise besitzt das thermoplastische Polyurethan eine Erweichungstemperatur von kleiner als 100°C, insbesondere kleiner als 80°C.

In einer besonders bevorzugten, erfindungsgemäßen Ausführungsform wird Desmomelt 530® als polymere Filmbildner-Matrix eingesetzt, das im Handel bei der Bayer Material Science AG, 51358 Leverkusen, Deutschland, erhältlich ist. Desmomelt 530® ist ein hydroxyl-terminiertes, weitgehend lineares, thermoplastisches, stark kristallisierendes Polyurethan-Elastomer.

Die Menge der polymeren Filmbildner-Matrix innerhalb eines reaktiven Klebstofffilms liegt erfindungsgemäß im Bereich von etwa 20-80 Gew.%, bevorzugt etwa 30-50 Gew.%, bezogen auf die Gesamtmischung der Bestandteile des reaktiven Klebstofffilms. Am stärksten bevorzugt werden 35-45 Gew.%, bevorzugt etwa 40 Gew.% der polymeren Filmbildner-Matrix, bezogen auf die Gesamtmischung der Bestandteile des reaktiven Klebstofffilms, eingesetzt. Die Gesamtmischung der Bestandteile des reaktiven Klebstofffilms steht hier für die gesamte Menge der eingesetzten polymeren Filmbildner-Matrix (a), der reaktiven Monomere oder Reaktivharze (b), des Reagens (c) sowie weiterer optional vorliegender Komponenten, die als Summe (in Gew.%) erhalten wird. Unter "Reagens (c)" versteht die vorliegende Erfindung einen Initiator, insbesondere einen Radikalinitiator im Falle eines ersten reaktiven Klebstofffilms (A) und einen Aktivator im Falle eines zweiten reaktiven Klebstofffilms (B).

### Reaktives Monomer oder Reaktivharz

Wie hierin verwendet, soll das reaktive Monomer oder Reaktivharz für ein Monomer oder Harz stehen, das insbesondere zu einer Radikalkettenpolymerisation in der Lage ist.

Erfindungsgemäß ist ein geeignetes, reaktives Monomer ausgewählt aus der Gruppe bestehend aus Acrylsäure, Acrylsäureester, Methacrylsäure, Methacrylsäureester, Vinylverbindungen und/oder oligomere bzw. polymere Verbindungen mit Kohlenstoff-Kohlenstoff-Doppelbindungen.

In einer bevorzugten Ausführungsform ist das reaktive Monomer ein oder mehrere Vertreter ausgewählt aus der Gruppe, bestehend aus: Methylmethacrylat (CAS-Nr. 80-62-6), Methacrylsäure (CAS-Nr. 79-41-4), Cyclohexylmethacrylat (CAS-Nr. 101-43-9), Tetrahydrofurfuryl-methacrylat (CAS-Nr. 2455-24-5), 2-Phenoxyethylmethacrylat (CAS-Nr. 10595-06-9), Di-(ethylenglykol)methylethermethacrylat (CAS-Nr. 45103-58-0) und/oder Ethylenglykoldimethacrylat (CAS-Nr. 97-90-5).

In einer weiteren bevorzugten, erfindungsgemäßen Ausführungsform enthält der reaktive Klebstofffilm eine Mischung von Cyclohexylmethacrylat, Tetrahydrofurfurylmethacrylat, Methacrylsäure und Ethylenglykoldimethacrylat als zu polymerisierende, reaktive Monomere.

In einer weiteren bevorzugten, erfindungsgemäßen Ausführungsform enthält der reaktive Klebstofffilm eine Mischung von Methylmethacrylat, Methacrylsäure und Ethylenglykoldimethacrylat als zu polymerisierende, reaktive Monomere.

In einer weiteren bevorzugten, erfindungsgemäßen Ausführungsform enthält der reaktive Klebstofffilm eine Mischung von 2-Phenoxyethylmethacrylat und Ethylenglykoldimethacrylat als zu polymerisierende, reaktive Monomere.

In einer weiteren bevorzugten, erfindungsgemäßen Ausführungsform enthält der reaktive Klebstofffilm eine Mischung von Di-(ethylenglykol)methylethermethacrylat und Ethylenglykoldimethacrylat als zu polymerisierende, reaktive Monomere.

Als Reaktivharz(e) können oligomere mono-, di-, tri- und höher funktionalisierte (Meth)acrylate ausgewählt werden. Sehr vorteilhaft werden diese im Gemisch mit zumindest einem reaktiven Monomer eingesetzt.

Jede dieser bevorzugten Ausführungsformen kann erfindungsgemäß mit einem thermoplastischen Polyurethan, wie z.B. Desmomelt 530®, als polymere Filmbildner-Matrix kombiniert werden.

Die Menge des reaktiven Monomers/der reaktiven Monomere/des Reaktivharzes/der Reaktivharze innerhalb eines reaktiven Klebstofffilms liegt erfindungsgemäß im Bereich von etwa 20-80 Gew.%, bevorzugt etwa 40-60 Gew.%, bezogen auf die Gesamtmischung der Bestandteile des reaktiven Klebstofffilms. Am stärksten bevorzugt werden etwa 40-50 Gew.% des reaktiven Monomers/der reaktiven Monomere/des Reaktivharzes/der Reaktivharze, bezogen auf die Gesamtmischung der Bestandteile des reaktiven Klebstofffilms, eingesetzt. Die Gesamtmischung der Bestandteile des reaktiven Klebstofffilms steht hier für die gesamte Menge der eingesetzten polymeren Filmbildner-Matrix (a), der reaktiven Monomere oder Reaktivharze (b), des Reagens (c) sowie weiterer optional vorliegender Komponenten, die als Summe (in Gew.%) erhalten wird. "Reagens (c)" steht hierbei für einen Initiator, insbesondere einen Radikalinitiator im Falle eines ersten reaktiven Klebstofffilms (A) und für einen Aktivator im Falle eines zweiten reaktiven Klebstofffilms (B).

### Initiator, insbesondere Radikalinitiator

Wie hierin verwendet, steht der Begriff Initiator, insbesondere Radikalinitiator bzw. radikalbildende Substanz (oder auch Härter) für eine Verbindung, die eine Polymerisationsreaktion oder Vernetzung des Klebstoffs einleiten kann. Der Initiator, insbesondere Radikalinitiator nimmt allerdings zu einem sehr geringen Anteil am Reaktionsgeschehen teil und bildet folglich keinen die Eigenschaften der Verklebung bestimmenden Polymeranteil.

In der vorliegenden Erfindung wird dem mindestens einen ersten, reaktiven Klebstofffilm des Klebstofffilm-Systems ein Initiator, insbesondere Radikalinitiator zugesetzt.

Bevorzugt werden Radikalinitiatoren. Es können alle im Stand der Technik bekannten Radikalinitiatoren eingesetzt werden. Bevorzugte Radikalinitiatoren sind Peroxide, Hydroperoxide und Azoverbindungen.

In einer besonders bevorzugten, erfindungsgemäßen Ausführungsform ist der Radikalinitiator ein organisches Peroxid. Besonders bevorzugt ist Dimethylbenzylhydroperoxid, das auch als Cumolhydroperoxid (CAS-Nr. 80-15-9) bekannt ist.

Die Menge des Radikalinitiators innerhalb eines reaktiven Klebstofffilms liegt erfindungsgemäß im Bereich von etwa 3-30 Gew.%, bevorzugt etwa 8-15 Gew.%, bezogen auf die Gesamtmischung der Bestandteile des reaktiven Klebstofffilms. Am stärksten bevorzugt werden etwa 9-11 Gew.% Radikalinitiator, bezogen auf die Gesamtmischung der Bestandteile des reaktiven Klebstofffilms, eingesetzt. Die Gesamtmischung der Bestandteile des reaktiven Klebstofffilms steht hierfür die gesamte Menge der eingesetzten polymeren Filmbildner-Matrix (a), der reaktiven Monomere oder Reaktivharze (b), des Reagens (c) sowie weiterer optional vorliegender Komponenten, die als Summe (in Gew.%) erhalten wird. "Reagens (c)" steht hierbei erneut für einen Initiator, insbesondere einen Radikalinitiator im Falle eines ersten reaktiven Klebstofffilms (A) und für einen Aktivator im Falle eines zweiten reaktiven Klebstofffilms (B).

### Aktivator

Wie hier verwendet, steht der Begriff Aktivator für eine Verbindung, die bereits bei sehr geringen Konzentrationen den Ablauf der Polymerisation erst ermöglicht oder beschleunigt. Aktivatoren können auch Beschleuniger oder Akzeleratoren genannt werden.

In der vorliegenden Erfindung wird dem mindestens einen zweiten, reaktiven Klebstofffilm (B) des Klebstofffilm-Systems ein Aktivator zugesetzt.

Geeignete Aktivatoren zur Verwendung in der vorliegenden Erfindung, wenn ein radikalisch polymerisierbares System aktiviert werden soll, sind beispielsweise ausgewählt aus der Gruppe, bestehend aus: einem Amin, einem Dihydropyridin-Derivat, einem Übergangsmetallsalz oder einem Übergangsmetallkomplex.

Insbesondere werden tertiäre Amine zur Aktivierung der radikalbildenden Substanz eingesetzt.

In einer besonders bevorzugten, erfindungsgemäßen Ausführungsform ist der Aktivator 3,5-Diethyl-1,2-dihydro-1-phenyl-2-propylpyridin (auch PDHP genannt, CAS-Nr. 34562-31-7).

Die Menge der zuvor beschriebenen Aktivatoren innerhalb des zweiten reaktiven Klebstofffilms (B) liegen erfindungsgemäß im Bereich von größer 0 bis etwa 40 Gew.%, bevorzugt etwa 15-25 Gew.%, bezogen auf die Gesamtmischung der Bestandteile des reaktiven Klebstofffilms. Am stärksten bevorzugt werden etwa 16-22 Gew.%, noch bevorzugter 18-20 Gew.% Aktivator, bezogen auf die Gesamtmischung der Bestandteile des reaktiven Klebstofffilms, eingesetzt. Die Gesamtmischung der Bestandteile des reaktiven Klebstofffilms steht hier für die gesamte Menge der eingesetzten polymeren Filmbildner-Matrix (a), der reaktiven Monomere oder Reaktivharze (b), des Reagens (c) sowie weiterer optional vorliegender Komponenten, die als Summe (in Gew.%) erhalten wird.

In einer weiteren Ausführungsform der vorliegenden Erfindung wird als Aktivator ein Übergangsmetallkomplex ausgewählt aus der Gruppe bestehend aus einem Mangan(II)-Komplex, einem Eisen(II)-Komplex oder einem Kobalt(II)-Komplex, jeweils mit einer Verbindung, ausgewählt aus Porphyrin, Porphyrazin oder Phthalocyanin oder einem Derivat einer dieser Verbindungen als Ligand. Die Menge des Aktivators auf Basis dieser Übergangsmetallkomplexe liegt erfindungsgemäß bevorzugt im Bereich von größer 0 bis etwa 10 Gew.%, bevorzugt etwa 0,1-5,0 Gew.%. Am stärksten bevorzugt werden etwa 0,2-3,0 Gew.%, noch bevorzugter 0,5-2,0 Gew.% Aktivator, bezogen auf die Gesamtmischung der Bestandteile des reaktiven Klebstofffilms, eingesetzt. Die Gesamtmischung der Bestandteile des reaktiven Klebstofffilms steht hier für die gesamte Menge der eingesetzten polymeren Filmbildner-Matrix (a), der reaktiven Monomere oder Reaktivharze (b), des Reagens (c) sowie weiterer optional vorliegender Komponenten, die als Summe (in Gew.%) erhalten wird.

### Weitere Bestandteile des reaktiven Klebstofffilms

Die reaktiven Klebstofffilme der vorliegenden Erfindung können gegebenenfalls weitere Additive und/oder Hilfsstoffe enthalten, die im Stand der Technik bekannt sind. Hier sind beispielsweise Füllstoffe, Farbstoffe, Keimbildner, rheologische Additive, Blähmittel, klebverstärkende Additive (Haftvermittler, Tackifier-Harze), Compoundierungsmittel, Weichmacher und/oder Alterungs-, Licht- und UV-Schutzmittel, zum Beispiel in Form von primären und sekundären Antioxidantien zu nennen.

### Zusammensetzungen bevorzugter reaktiver Klebstofffilme

In einer bevorzugten, erfindungsgemäßen Ausführungsform umfasst der mindestens eine erste Klebstofffilm (A) eine Mischung der folgenden Bestandteile: thermoplastisches Polyurethan, insbesondere Desmomelt 530®, Cyclohexylmethacrylat, Tetrahydrofurfurylmethacrylat, Methacrylsäure, Ethylenglykoldimethacrylat und Cumolhydroperoxid.

In einer weiteren bevorzugten, erfindungsgemäßen Ausführungsform umfasst der mindestens eine erste Klebstofffilm (A) eine Mischung der folgenden Bestandteile: thermoplastisches Polyurethan, insbesondere Desmomelt 530®, Methylmethacrylat, Methacrylsäure, Ethylenglykoldimethacrylat und Cumolhydroperoxid.

In einer weiteren bevorzugten, erfindungsgemäßen Ausführungsform umfasst der mindestens eine erste Klebstofffilm (A) eine Mischung der folgenden Bestandteile: thermoplastisches Polyurethan, insbesondere Desmomelt 530®, 2-Phenoxyethylmethacrylat, Ethylenglykoldimethacrylat und Cumolhydroperoxid.

In einer weiteren bevorzugten, erfindungsgemäßen Ausführungsform umfasst der mindestens eine erste Klebstofffilm (A) eine Mischung der folgenden Bestandteile: thermoplastisches Polyurethan, insbesondere Desmomelt 530®, Di-(ethylenglykol)methylethermethacrylat, Ethylenglykoldimethacrylat und Cumolhydroperoxid.

Jede dieser bevorzugten, erfindungsgemäßen Ausführungsformen enthält etwa 20-80 Gew. % thermoplastisches Polyurethan, etwa 20-80 Gew. % reaktive(s) Monomer(e) und etwa 3-30 Gew. % Cumolhydroperoxid, vorzugsweise etwa 30-50 Gew. % thermoplastisches Polyurethan, etwa 40-60 Gew. % reaktive Monomere und etwa 8-15 Gew. % Cumolhydroperoxid, bezogen auf die Gesamtmischung der Bestandteile des reaktiven Klebstofffilms.

In einer bevorzugten, erfindungsgemäßen Ausführungsform umfasst der mindestens eine zweite Klebstofffilm (B) eine Mischung der folgenden Bestandteile: thermoplastisches Polyurethan, insbesondere Desmomelt 530®, Cyclohexylmethacrylat, Tetrahydrofurfurylmethacrylat, Methacrylsäure, Ethylenglykoldimethacrylat und PDHP.

In einer weiteren bevorzugten, erfindungsgemäßen Ausführungsform umfasst der mindestens eine zweite Klebstofffilm (B) eine Mischung der folgenden Bestandteile: thermoplastisches Polyurethan, insbesondere Desmomelt 530®, Methylmethacrylat, Methacrylsäure, Ethylenglykoldimethacrylat und PDHP.

In einer weiteren bevorzugten, erfindungsgemäßen Ausführungsform umfasst der mindestens eine zweite Klebstofffilm (B) eine Mischung der folgenden Bestandteile: thermoplastisches Polyurethan, insbesondere Desmomelt 530®, 2-Phenoxyethylmethacrylat, Ethylenglykoldimethacrylat und PDHP.

In einer weiteren bevorzugten, erfindungsgemäßen Ausführungsform umfasst der mindestens eine zweite Klebstofffilm (B) eine Mischung der folgenden Bestandteile: thermoplastisches Polyurethan, insbesondere Desmomelt 530®, Di-(ethylenglykol)methylethermethacrylat, Ethylenglykoldimethacrylat und PDHP.

Jede dieser bevorzugten, erfindungsgemäßen Ausführungsformen enthält etwa 20-80 Gew. % thermoplastisches Polyurethan, etwa 20-80 Gew. % reaktive(s) Monomer(e) und größer 0 bis etwa 40 Gew. % PDHP, vorzugsweise etwa 30-50 Gew. % thermoplastisches Polyurethan, etwa 40-60 Gew. % reaktive(s) Monomer(e) und etwa 15-25 Gew. % PDHP, bezogen auf die Gesamtmischung der Bestandteile des reaktiven Klebstofffilms.

Wie hierin verwendet, bezieht sich die Gesamtmischung der Bestandteile des reaktiven Klebstofffilms auf die gesamte Menge der eingesetzten polymeren Filmbildner-Matrix (a), der/des reaktiven Monomere/Monomers und oder der/des Reaktiveharze/Reaktivharzes (b), des Reagens (c) sowie weiterer optional vorliegender Komponenten, die als Summe (in Gew.%) erhalten wird.

Ebenfalls bevorzugte Beispiele des wenigstens einen zweiten reaktiven Klebstofffilms (B) umfassen die folgenden Mischungen:
- eine Mischung aus thermoplastischem Polyurethan, insbesondere Desmomelt 530®, 2-Phenoxyethylmethacrylat, 2-Hydroxyethylmethacrylat, 2-Hydroxypropylmethacrylat, Ethylenglykoldimethacrylat und Eisen(II)-phthalocyanin;
- eine Mischung aus thermoplastischem Polyurethan, insbesondere Desmomelt 530®, 2-Phenoxyethylmethacrylat, 2-Hydroxyethylmethacrylat, Ethylenglykoldimethacrylat und Eisen(II)-phthalocyanin.

Die reaktiven Klebstofffilme (A) und (B) der Erfindung besitzen in der Regel unabhängig voneinander jeweils eine Schichtdicke im Bereich von etwa 20-200 µm, bevorzugt etwa 30-100 µm, bevorzugter etwa 40-60 µm und besonders bevorzugt etwa 50 µm. Zur Herstellung größerer Schichtdicken kann es von Vorteil sein, mehrere Klebstofffilmschichten zusammen zu laminieren.

Zudem ist der erfindungsgemäße, reaktive Klebstofffilm (A) und/oder (B) dadurch gekennzeichnet, dass er bevorzugt haftklebrige Eigenschaften besitzt. Als haftklebrige Stoffe sind gemäß Römpp solche viskoelastischen Klebstoffe definiert (Römpp Online 2013, Dokumentkennung RD-08-00162), deren abgebundener, trockener Film bei Raumtemperatur permanent klebrig ist und klebfähig bleibt. Die Haftklebung erfolgt durch leichten Anpressdruck sofort auf fast allen Substraten. Als leichter Anpressdruck ist hier ein Anpressdruck von größer 0 bar, der für eine Dauer von größer 0 Sekunden ausgeübt wird, gemeint.

### Reaktives Klebstofffilm-System

Erfindungsgemäß werden der erste und der zweite reaktive Klebstofffilm (A) und (B), wie oben beschrieben, für das reaktive Klebstofffilm-System eingesetzt, welches dadurch gekennzeichnet ist, dass der erste reaktive Klebstofffilm (A), neben der Filmbildner-Matrix (a) und mindestens einem reaktiven Monomer oder Reaktivharz (b), einen Initiator, insbesondere Radikalinitiator enthält, und der zweite reaktive Klebstofffilm (B), neben der Filmbildner-Matrix (a) und mindestens einem reaktiven Monomer oder Reaktivharz (b), einen Aktivator enthält.

Entscheidend ist, dass wenigstens eine Außenseite des ersten reaktiven Klebstofffilms (A) und/oder des zweiten reaktiven Klebstofffilms (B) plasmabehandelt ist. Der Begriff "Außenseite" wie hierin verwendet bezieht sich auf die Seite des ersten oder zweiten reaktiven Klebstofffilms (A) oder (B), die der Innenseite desselben Klebstofffilms gegenüberliegt, wobei die Innenseite als Kontaktfläche zwischen dem ersten reaktiven Klebstofffilm (A) und dem zweiten reaktiven Klebstofffilm (B) dient.

Mit anderen Worten weist wenigstens ein reaktiver Klebstofffilm des erfindungsgemäßen Klebstoffilm-Systems eine plasmabehandelte Außenseite auf, die zur Verklebung mit einem Material, bevorzugt zur Verklebung mit einem Material mit einer unpolaren Oberfläche zur Verfügung steht.

Die der plasmabehandelten Seite abgewandte Seite des plasmabehandelten Klebstofffilms (z.B. Film (A)), d.h. die "Innenseite" des plasmabehandelten Klebstofffilms (z.B. Film (A)) ist als Kontaktfläche für den anderen reaktiven Klebstofffilm vorgesehen (d.h. Film (B), wenn Film (A) eine plasmabehandelte Außenseite aufweist). Das bedeutet, dass ein reaktiver Klebstofffilm (A) und ein reaktiver Klebstofffilm (B) in dem reaktiven Klebstofffilm-System der vorliegenden Erfindung über Innenseiten mit einander in Kontakt stehen.

Das erfindungsgemäße reaktive Klebstofffilm-System umfasst also zwei oder mehrere reaktive Klebstofffilme, wie oben definiert. Sind mehr als nur ein erster reaktiver Klebstofffilm (A) und/oder mehr als nur ein zweiter reaktiver Klebstofffilm (B) in dem Klebstofffilm-System vorhanden, dann liegen die zwei oder mehr reaktiven Klebstofffilme (A) und/oder (B) bevorzugt jeweils abwechselnd vor, so dass jeder Klebstoffilm (A) mit wenigstens einem Klebstofffilm (B) in Kontakt steht.

Der erste und der zweite reaktive Klebstofffilm (A) und (B) vernetzen und härten aus, sobald sie unter mäßigem Druck, insbesondere 0,5 bis 3 bar, bei Temperaturen im Bereich von Raumtemperatur bis 100°C flächig in Kontakt mit einander gebracht werden. Der genannte mäßige Druck soll insbesondere von Hand zu erreichen sein. Die Kontaktzeit beträgt erfindungsgemäß, je nach Temperatur, einige Minuten bis einige Stunden. Der Druck kann maschinell oder manuell aufgebracht werden.

Werden die beiden reaktiven Klebstofffilme (A) und (B), wie oben beschrieben, zuvor auf den zu verklebenden Substraten aufgebracht, kommt durch die oben beschriebene Vernetzung eine dauerhafte Verklebung der Substrate zu Stande. Alternativ kann zunächst auch Klebstofffilm (A) auf das erste zu verklebende Substrat aufgebracht und auf Klebstofffilm (A) Klebstofffilm (B) aufgebracht werden. Anschließend wird dann das zweite zu verklebende Substrat auf Klebstofffilm (B) aufgebracht.

Weiterhin kann das reaktive Klebstofffilm-System der Erfindung temporäre Träger, d.h. Trennpapier oder Trennliner umfassen.

### Substrate

Geeignete Substrate, die zur Verklebung über das erfindungsgemäße, reaktive Klebstofffilm-System geeignet sind, sind Metalle, Glas, Holz, Beton, Stein, Keramik, Textil und/oder Kunststoffe. Die zu verklebenden Substrate können gleich oder verschieden sein.

In einer bevorzugten Ausführungsform wird das erfindungsgemäße, reaktive Klebstofffilm-System zur Verklebung von Materialien mit unpolaren Oberflächen eingesetzt. Der Ausdruck "unpolare Oberfläche" oder auch "niederenergetische Oberfläche" wie hierin verwendet bezieht sich auf Oberflächen, die eine im Vergleich zu Polyethylenterephthalat (PET) geringere freie Oberflächenenergie aufweisen. Bevorzugte niederenergetische Oberflächen weisen eine geringere freie Oberflächenenergie auf als PET, dessen freie Oberflächenenergie 40.9 mN/m beträgt, wobei bevorzugt der disperse Anteil des PET 37,8 und der polare Anteil des PET 3,1 mN/m beträgt. In einer besonders bevorzugten, erfindungsgemäßen Ausführungsform werden Ethylen-Propylen-DienKautschuk (EPDM), Polyethylen (PE), Polypropylen (PP) und/oder Polytetrafluoroethylen (PTFE) verklebt.

Zu verklebende, geeignete Metallsubstrate können generell aus allen geläufigen Metallen und Metalllegierungen gefertigt werden. Bevorzugt kommen Metalle, wie zum Beispiel Aluminium, Edelstahl, Stahl, Magnesium, Zink, Nickel, Messing, Kupfer, Titan, eisenhaltige Metalle und Legierungen zum Einsatz. Die zu verklebenden Teile können außerdem aus unterschiedlichen Metallen aufgebaut sein.

Weitere geeignete Kunststoffsubstrate sind beispielsweise Acrylnitril-Butadien-StyrolCopolymere (ABS), Polycarbonate (PC), ABS/PC-Blends, PMMA, Polyamide, Glasfaserverstärkte Polyamide, Polyvinylchlorid, Polyvinylenfluorid, Cellulose Acetat, Cycloolefin-Copolymere, Flüssigkristallpolymere (LCP), Polylactid, Polyetherketone, Polyetherimid, Polyethersulfon, Polymethacrylmethylimid, Polymethylpenten, Polyphenylether, Polyphenylensulfid, Polyphthalamid, Polyurethane, Polyvinylacetat, Styrol Acrylnitril Copolymere, Polyacrylate bzw. Polymethacrylate, Polyoxymethylen, Acrylester-Styrol-Acrylnitril Copolymere, Polyethylen, Polystyrol, Polypropylen und/oder Polyester, wie z.B. Polybutylenterephthalate (PBT) und/oder Polyethylenterephthalat (PET).

Substrate können lackiert, bedruckt, bedampft oder besputtert sein.

Die erfindungsgemäßen reaktiven Klebstofffilm-Systeme erlauben hohe Klebfestigkeiten auch gegenüber unpolaren Oberflächen. Bevorzugt findet das erfindungsgemäße Klebstofffilm-System daher Einsatz in Anwendungen, in denen die plasmabehandelte Außenseite des wenigstens ersten und/oder zweiten reaktiven Klebstofffilms mit einer unpolaren Oberfläche in Kontakt gebracht und verklebt wird.

Die zu verklebenden Substrate können jede beliebige Form annehmen, die für die Verwendung des resultierenden Verbundkörpers erforderlich ist. In der einfachsten Form sind die Substrate eben. Außerdem können auch dreidimensionale Substrate, die z.B. geneigt sind, mit dem erfindungsgemäßen, reaktiven Klebstofffilm-System verklebt werden. Die zu verklebenden Substrate können auch die verschiedensten Funktionen einnehmen, wie zum Beispiel Gehäuse, Sichtfenster, Versteifungselemente, etc.

In einer bevorzugten Ausführungsform der Erfindung wird das hierin beschriebene reaktive Klebstofffilm-System zu Verklebung von unpolaren Oberflächen verwendet. Hierbei wird die plasmabehandelte Außenseite eines reaktiven Klebstofffilms in Kontakt mit der zu verklebenden unpolaren Oberfläche des Substrates gebracht. Werden zwei unpolare Substrate miteinander verbunden, dann sind bevorzugt beide für eine Verklebung zur Verfügung stehenden Außenseiten der reaktiven Klebstofffilme in dem reaktiven Klebstofffilm-System plasmabehandelt.

In einer weiteren bevorzugten Ausführungsform der Erfindung ist auch die niederenergetische Oberfläche des(r) zu verklebenden unpolaren Substrate(s) plasmabehandelt.

### Verfahren zur Herstellung eines reaktiven Klebstofffilm-Systems

Die erfindungsgemäßen, reaktiven Klebstofffilm-Systeme können hergestellt werden durch ein Verfahren, umfassend die folgenden Schritte (i) bis (iii):
(i) das Bereitstellen wenigstens eines ersten reaktiven Klebstofffilms (A) mit (a) einer polymeren Filmbildner-Matrix, (b) mindestens einem reaktiven Monomer oder Reaktivharz und (c) einem Initiator, insbesondere Radikalinitiator;
(ii) das Bereitstellen wenigstens eines zweiten reaktiven Klebstofffilms (B), mit (a) einer polymeren Filmbildner-Matrix, (b) mindestens einem reaktiven Monomer oder Reaktivharz und (c) einem Aktivator; sowie
(iii) das Plasmabehandeln einer Außenseite wenigstens eines ersten reaktiven Klebstofffilms (A) und/oder eines zweiten reaktiven Klebstofffilms (B).

Die reaktiven Klebstofffilme (A) und (B) können dabei für die Schritte (i) und (ii) durch die in Anspruch 16 als Unterschritte a. bis e. zusammengefassten Verfahrensschritte hergestellt werden. Diese Unterschritte lassen sich wie folgt wiedergeben:
In einem ersten Schritt werden die Inhaltsstoffe in einem oder mehreren Lösemittel(n) und/oder Wasser gelöst bzw. fein verteilt. Alternativ ist kein Lösemittel und/oder Wasser notwendig, da die Inhaltsstoffe bereits vollständig ineinander löslich sind (ggf. unter Einwirkung von Wärme und/oder Scherung). Geeignete Lösemittel sind im Stand der Technik bekannt, wobei bevorzugt Lösemittel eingesetzt werden, in denen mindestens einer der Inhaltsstoffe eine gute Löslichkeit aufweist. Besonders bevorzugt ist Aceton.

Wie hierin verwendet, umfasst der Begriff Inhaltsstoff die polymere Filmbildner-Matrix, mindestens ein reaktives Monomer oder Reaktivharz, ein Reagens ("Reagens (c)"), ausgewählt aus einem Initiator, insbesondere Radikalinitiator oder einem Aktivator, sowie gegebenenfalls weitere Additive und/oder Hilfsstoffe, wie oben definiert.

Anschließend werden die aufgelösten oder fein verteilten Inhaltsstoffe in einem zweiten Schritt vermischt. Zur Herstellung der Mischung werden übliche Rührgeräte eingesetzt. Gegebenenfalls wird die Lösung zudem erwärmt. Ggf. werden die Inhaltsstoffe gleichzeitig aufgelöst bzw. feinverteilt und vermischt.

Daraufhin wird in einem dritten Schritt ein Trennpapier, ein Trägermaterial oder ein Haftklebstoff mit der Mischung der aufgelösten bzw. fein verteilten Inhaltsstoffe nach Schritt 2 beschichtet. Die Beschichtung erfolgt nach den üblichen Techniken, die im Stand der Technik bekannt sind.

Nach der Beschichtung wird das Lösemittel in einem vierten Schritt durch Abdampfen entfernt.

Gegebenenfalls kann der reaktive Klebstofffilm in einem weiteren Schritt zu einer Rolle aufgewickelt werden.

Zur Lagerung werden die erfindungsgemäßen, reaktiven Klebstofffilme mit einem Trennliner oder -papier abgedeckt.

Alternativ werden die erfindungsgemäßen, reaktiven Klebstofffilme lösungsmittelfrei durch Extrusion, Hotmeltdüsenbeschichtung oder Kalandrieren hergestellt.

Vor der Verklebung des erfindungsgemäßen reaktiven Klebstofffilm-Systems wird die Außenseite des wenigstens einen ersten und/oder zweiten reaktiven Klebstofffilms ((A), (B)) plasmabehandelt.

### Anwendung des reaktiven Klebstofffilm-Systems

Typischerweise wird das erfindungsgemäße reaktive Klebstofffilm-System wie folgt verwendet:
Der mindestens eine erste Klebstofffilm (A) wird auf eine Oberfläche eines zu verklebenden Substrats aufgebracht. Außerdem wird der mindestens eine zweite Klebstofffilm (B) auf eine Oberfläche eines zweiten zu verklebenden Substrats aufgebracht. Die auf die Oberfläche des zu verklebenden Substrates aufgebrachte Fläche (Außenseite) des ersten und/oder zweiten reaktiven Klebstofffilms ist dabei zuvor plasmabehandelt worden. Kommen bei der Verklebung unpolare, d.h. niederenergetische Oberflächen, bevorzugt Polyethylen oder Polypropylen, zum Einsatz, dann wird die plasma-behandelte Außenseite eines reaktiven Klebstofffilms (A) oder (B), bevorzugt (A) mit dieser Oberfläche in Kontakt gebracht. Besonders bevorzugt ist auch die Oberfläche, bevorzugt die niederenergetische Oberfläche des Substrates, über die das Substrat mit der plasmabehandelten Außenseite des reaktiven Klebstofffilms (A) oder (B) in Kontakt steht oder in Kontakt gebracht werden soll, plasmabehandelt.

Nach dem Aufbringen der Klebestofffilme (A) und (B) auf die zu verklebenden Substrate über ihre Außenseiten werden die Klebestofffilme (A) und (B) sodann selber über ihre Innenseiten mit einander in Kontakt gebracht und über Verpresszeiten im Bereich von einigen Minuten bis zu mehreren Stunden, bei Temperaturen von Raumtemperatur bis zu 100°C in Kontakt gelassen, wodurch die Polymerisationsreaktion startet und der Klebstoff aushärtet. Alternativ kann beispielsweise der mindestens eine zweite Klebstofffilm (B) auch auf den ersten Klebstofffilm (A) aufgebracht werden und erst anschließend die Oberfläche eines zweiten zu verklebenden Substrats darauf aufgebracht werden.

Gegebenenfalls kann das oben beschriebene Verfahren wiederholt werden, um so eine Verklebung der Schichten Substrat-(A)-(B)-(A)-(B)-Substrat oder Substrat-(B)-(A)-(B)-Substrat oder Substrat-(A)-(B)-(A)-Substrat, etc. zu erreichen. Dies kann vorteilhaft sein, wenn unterschiedliche ausgeprägte Hafteigenschaften zwischen den zu verklebenden Substraten und den ersten und zweiten Klebstofffilmen (A) und (B) gegeben sind.

Erfindungsgemäß wird dabei die plasmabehandelte Außenseite des wenigstens einen plasmabehandelten reaktiven Klebstofffilms (A) oder (B) mit einer unpolaren Oberfläche eines zu verklebenden Gegenstandes in Verbindung gebracht, wenn eine solche unpolare Oberfläche verklebt wird.

### Verbundkörper

Schließlich wird erfindungsgemäß ein Verbundkörper bereitgestellt, umfassend das erfindungsgemäße, reaktive Klebstofffilm-System, wie oben definiert.

### Plasmabehandlung

Zur Plasmabehandlung einer Außenseite des wenigstens einen ersten und/oder des wenigstens einen zweiten reaktiven Klebstofffilms (A) beziehungsweise (B) wird das Plasma bevorzugt mittels einer oder mehrerer Düse(n) auf die zu behandelnde Seite des reaktiven Klebstofffilms aufgebracht, bevorzugt bei Betrieb mit Druckluft oder N₂. Sofern auch die zu verklebenden Substratoberfläche einer Plasmabehandlung unterworfen werden soll, kann die Plasmabehandlung des Substrates auf die gleiche Art und Weise erfolgen. D.h., es wird Plasma bevorzugt mittels einer oder mehrerer Düse(n) auf die zu verklebende Seite des Substrates aufgebracht, bevorzugt bei Betrieb mit Druckluft oder N₂.

Besonders bevorzugt wird das Plasma mittels einer Rotationsdüse aufgebracht, besonders bevorzugt bei Betrieb mit Druckluft oder N₂.

Moderne indirekte Plasmatechniken basieren oft auf einem Düsenprinzip. Hierbei kann die Düse rund oder linienförmig ausgeführt sein, teilweise wird mit Rotationsdüsen gearbeitet, ohne hier eine Einschränkung vornehmen zu wollen. Ein solches Düsenprinzip ist vorteilhaft aufgrund seiner Flexibilität und seiner inhärent einseitigen Behandlung. Solche Düsen, beispielsweise der Firma Plasmatreat, sind industriell weit verbreitet zur Vorbehandlung von Untergründen vor einer Verklebung. Nachteilig sind die indirekte und weniger effiziente da entladungsfreie Behandlung, und dadurch die reduzierten Bahngeschwindigkeiten. Die übliche Bauform einer Runddüse ist jedoch besonders gut geeignet, schmale Warenbahnen zu behandeln, wie beispielsweise ein Klebeband mit einer Breite von wenigen cm.

Es sind verschiedene Plasmaerzeuger auf dem Markt, die sich in der Technik zur Plasmaerzeugung, der Düsengeometrie und der Gasatmosphäre unterscheiden. Obwohl sich die Behandlungen unter anderem in der Effizienz unterscheiden, sind die grundsätzlichen Effekte meist ähnlich und sind vor allem durch die eingesetzte Gasatmosphäre bestimmt. Eine Plasma-Behandlung kann in verschiedenen Atmosphären stattfinden, wobei die Atmosphäre auch Luft umfassen kann. Die Behandlungsatmosphäre kann eine Mischung verschiedener Gase sein, ausgewählt unter anderem aus N₂, O₂, H₂, CO₂, Ar, He, Ammoniak, wobei zudem Wasserdampf oder andere Bestandteile beigemischt sein können. Durch diese beispielhafte Auflistung wird keine Einschränkung vorgenommen.

Gemäß einer vorteilhaften Ausführungsform der Erfindung bilden folgende reine oder Mischungen von Prozessgasen eine Behandlungsatmosphäre: N₂, Druckluft, O₂, H₂, CO₂, Ar, He, Ammoniak, Ethylen, wobei zudem Wasserdampf oder andere flüchtige Bestandteile zugesetzt sein können. Bevorzugt werden N₂ und Druckluft.

Grundsätzlich kann man der Atmosphäre auch beschichtende oder polymerisierende Bestandteile beimischen, als Gas (zum Beispiel Ethylen) oder Flüssigkeiten (vernebelt als Aerosol). Es ist fast keine Einschränkung der in Frage kommenden Aerosole gegeben. Besonders die indirekt arbeitenden Plasmatechniken sind für den Einsatz von Aerosolen geeignet, da hier keine Verschmutzung der Elektroden droht.

Da die Effekte einer Plasmabehandlung chemischer Natur sind und eine Veränderung der Oberflächenchemie im Vordergrund steht, kann man die oben beschriebenen Methoden auch als chemisch-physikalische Behandlungsmethoden beschreiben. Obwohl sich Unterschiede im Detail ergeben können, ist im Sinne dieser Erfindung keine besondere Technik hervorzuheben, weder von der Art der Plasmaerzeugung noch der Bauart.

Weiterhin bevorzugt ist die Aufbringung des Plasmastrahls mittels Rotation der Düsenspitze. Der Plasmastrahl überstreicht dann in einem vorgegebenen Winkel kreisförmig das Substrat und bietet vorteilhaft eine gute Behandlungsbreite für Klebebänder. Durch die Rotation überstreicht der Behandlungsstrahl je nach Verfahrgeschwindigkeit mehrfach die gleichen Stellen, führt also implizit eine Mehrfachbehandlung durch.

Eine ebenfalls bevorzugte Variante der Plasmabehandlung ist die Verwendung eines feststehenden Plasmastrahls ohne Rotationsdüse.

Eine ebenfalls bevorzugte Plasmabehandlung verwendet eine seitlichen Anordnung von mehreren Düsen, versetzt, wenn nötig, zur lückenlosen, teilweise überlappenden Behandlung in hinreichender Breite. Nachteilig hierbei ist die nötige Anzahl an Düsen, typischerweise müssten anstelle einer Rotationsdüse zwei bis vier nicht-rotierende Runddüsen eingesetzt werden.

Die Bauform einer Rund-Düse ist im Allgemeinen bevorzugt für Verklebungen von schmalen Klebebändern. Linear-Düsen sind aber auch geeignet.

Gemäß einer weiteren vorteilhaften Ausführungsform der Erfindung beträgt der Behandlungsabstand 1 bis 100 mm, bevorzugt 3 bis 50 mm, besonders bevorzugt 4 bis 20 mm.

Weiter vorzugsweise beträgt die Behandlungsgeschwindigkeit 0, bis 200 m/min, bevorzugt 1 bis 50 m/min, besonders bevorzugt 2 bis 20 m/min.

Besonders bevorzugt ist eine Universal-Behandlung mittels Rotationsdüse bei 9 bis 12 mm Abstand zwischen Düse und der zu behandelnden Oberfläche bei einer lateralen Relativbewegung zwischen Düse und Substrat von 4 bis 6 m/min.

Selbstverständlich muss die Behandlung innerhalb eines Bereiches erfolgen, in dem das Gas reaktiv ist, beziehungsweise innerhalb eines Abstandes (zum Beispiel zu einer Düse), in dem das Gas noch reaktiv ist. Bei einer Düse umfasst dieser Bereich den Wirkbereich des Plasmastrahls.

Die Plasmabehandlung der Oberfläche kann auch mehrmals stattfinden.

Eine Behandlung kann mehrfach hintereinander erfolgen, um die gewünschte Intensität zu erreichen. Dies passiert stets bei der bevorzugten Rotationsbehandlung oder bei teilweise überlappenden Düsenanordnungen.

Die nötige Behandlungsintensität kann zum Beispiel durch mehrere Durchfahrten unter einer Düse oder durch Anordnung von mehreren Düsen hintereinander erzielt werden. Die Mehrfachbehandlung kann auch zur Auffrischung der Behandlung genutzt werden. Möglich ist auch, dass die Behandlung in mehrere Einzelbehandlungen aufgeteilt sein kann.

Der Zeitpunkt ist nicht vorgegeben, jedoch bevorzugt kurz vor der Verklebung.

Bei einer Behandlung direkt vor der Verklebung kann der zeitlich Abstand zur Verklebung <1 s sein, bei einer Inline-Behandlung vor dem Verkleben im Bereich von Sekunden bis Minuten, bei einer Offline-Behandlung im Bereich von Stunden bis Tagen, und bei einer Behandlung im Herstellungsprozess des Klebebands im Bereich von Tagen bis vielen Monaten.

Wie die meisten physikalischen Behandlungen kann eine Plasmabehandlung im Laufe der Zeit abklingen. Dies kann allerdings stark von den Details der Behandlung und des Klebebandes abhängen. Offensichtlich ist während eines möglichen Abklingens die Adhäsion noch verbessert gegenüber dem unbehandelten Zustand. Grundsätzlich ist die verbesserte Adhäsion auch in diesem Zeitraum ein Teil dieser Lehre.

Grundsätzlich kann die Behandlung durch eine wiederholte Behandlung erzeugt werden oder aufgefrischt werden. Der Ausdruck "plasmabehandelt" wie im Zusammenhang mit der Außenseite des hierin beschriebenen Klebstofffilm-Systems verwendet bedeutet also, dass die adhäsionssteigernde Wirkung der Plasmabehandlung noch nicht vollständig abgeklungen ist.

Der zeitliche Abstand zwischen den Mehrfachbehandlungen kann also reichen von ca. 0,1 s (während der Rotation der Düse) bis hin zu ca. 1 Jahr (wenn ein Produkt behandelt ausgeliefert wird, mit einer Auffrischbehandlung vor der Anwendung).

Die Behandlung kann inline mit dem Verkleben erfolgen.

Wie viele Einzeldüsen oder sonstige Plasmaerzeuger für die Behandlung verwendet werden, ist nicht eingeschränkt.

Wie viele Einzelbehandlungen mit der oder den Plasmaerzeugern durchgeführt werden, ist nicht eingeschränkt.

Beispielsweise wäre die Vorbehandlung der Oberfläche mit einem bestimmten Plasmaerzeuger denkbar, wobei zu einem späteren Zeitpunkt mit einem sich unterscheidenden Plasmaerzeuger die Behandlung ergänzt oder aufgefrischt wird.

Ferner könnte die Oberfläche bereits mittels Flamme oder Corona vorbehandelt gewesen sein, bevor sie mit dem hier gelehrten Verfahren behandelt wird. Beispielsweise werden Kunststoffteile oder Folien herstellerseitig manchmal mit einer physikalischen Vorbehandlung ausgerüstet.

In einer Variante der Erfindung wird das Plasma mit einer Plasmadüseneinheit mit zusätzlicher Einleitung eines Precursormaterials in den Arbeitsgasstrom oder in den Plasmastrahl aufgetragen. Die Beaufschlagung kann dabei zeitlich versetzt oder gleichzeitig erfolgen.

Ein Atmosphärendruckplasma (und eine Oberflächenbehandlung mittels desselben) unterscheidet sich wesentlich von einer Coronaentladung (und einer Oberflächenbehandlung mittels derselben). Für die Zwecke der vorliegenden Erfindung führt die nachfolgend näher beschriebene Coronaentladung ebenfalls zu "plasmabehandelten" Oberflächen. Mit anderen Worten kann die Außenseite des ersten oder zweiten Klebstofffilms auch mittels Coronaentladung behandelt werden, um eine plasmabehandelte Außenfläche zu geben.

Eine Coronabehandlung ist als eine durch hohe Wechselspannung zwischen zwei Elektroden erzeugte Oberflächenbehandlung mit filamentären Entladungen definiert, wobei die diskreten Entladungskanäle auf die zu behandelnde Oberfläche treffen, siehe dazu auch Wagner et al., Vacuum, 71 (2003), Seiten 417 bis 436. Ohne weitere Qualifizierung ist als Prozessgas Umgebungsluft anzunehmen.

Fast immer wird das Substrat im Entladungsraum zwischen einer Elektrode und einer Gegenelektrode platziert oder hindurchgeführt, was als "direkte" physikalische Behandlung definiert ist. Bahnförmige Substrate werden dabei typischerweise zwischen einer Elektrode und einer geerdeten Walze durchgeführt.

Insbesondere wird meist unter dem Begriff "Corona" eine "dielektrische Barrierenentladung" (engl, dielectric barrier discharge, DBD) verstanden. Dabei besteht mindestens eine der Elektroden aus einem Dielektrikum, also einem Isolator, oder ist mit einem solchen beschichtet oder überzogen.

Die Behandlungsintensität einer Coronabehandlung wird als "Dosis" in [Wmin/m²] angegeben, mit der Dosis D=P/b*v, mit P=elektrischer Leistung [W], b=Elektrodenbreite [m], und v=Bahngeschwindigkeit [m/min].

Fast immer wird das Substrat im Entladungsraum zwischen einer Elektrode und einer Gegenelektrode platziert oder hindurchgeführt, was als "direkte" physikalische Behandlung definiert ist. Bahnförmigen Substrate werden dabei typischerweise zwischen einer Elektrode und einer geerdeten Walze durchgeführt. Manchmal wird noch der Begriff einer "ausgeblasenen Corona" beziehungsweise "einseitigen Corona" verwendet. Dies ist nicht vergleichbar mit einem Atmosphärendruckplasma, da in der Regel nur unregelmäßige Entladungsfilamente zusammen mit einem Prozessgas "ausgeblasen" werden, und häufig keine stabile, wohldefinierte, effiziente Behandlung möglich ist.

"Atmosphärendruckplasma" ist als ein elektrisch aktiviertes, homogenes, reaktives Gas, welches sich nicht im thermischen Equilibrium befindet, mit einem Druck nahe dem Umgebungsdruck definiert. Durch die elektrischen Entladungen und durch lonisierungsprozesse im elektrischen Feld wird das Gas aktiviert und hochangeregte Zustände in den Gasbestandteilen erzeugt. Das verwendete Gas oder die Gasmischung wird als Prozessgas bezeichnet. Grundsätzlich kann man der Plasmaatmosphäre auch beschichtende oder polymerisierende Bestandteile als Gas oder Aerosol beimischen.

Der Begriff "homogen" deutet darauf hin, dass keine diskreten, inhomogenen Entladungskanäle auf die Oberfläche des zu behandelnden Substrats treffen (auch wenn diese im Erzeugungsraum vorhanden sein können).

Die Einschränkung "nicht im thermischen Equilibrium" bedeutet, dass die lonentemperatur sich von der Elektronentemperatur unterscheiden kann. Bei einem thermisch erzeugten Plasma wären diese im Gleichgewicht (siehe dazu auch zum Beispiel Akishev et al., Plasmas and Polymers, Vol. 7, No. 3, Sept. 2002).

Bei der physikalischen Behandlung einer Oberfläche mittels Atmosphärendruckplasma findet die elektrische Entladung meist in einem von der Oberfläche getrennten Raum statt. Das Prozessgas wird dann durch diesen Raum geführt, elektrisch aktiviert und dann als Plasma meist durch eine Düse auf die Oberfläche geleitet. Die Reaktivität des Plasmastrahls klingt meist nach Austritt zeitlich schnell ab, räumlich typischerweise nach Millimetern bis Zentimetern. Das austretende abklingende Plasma wird oft als englisch "afterglow" bezeichnet. Die Lebenszeit und nutzbare Strecke des austretenden Plasmas hängt von molekularen Details und der genauen Plasmaerzeugung ab.

Diese Art von physikalischer Behandlung wird als "indirekt" bezeichnet, wenn die Behandlung nicht am Erzeugungsort der elektrischen Entladungen vorgenommen wird. Die Behandlung der Oberfläche findet bei oder nahe bei Atmosphärendruck statt, wobei jedoch der Druck im elektrischen Entladungsraum erhöht sein kann.

Es sind aber beispielsweise auch Konzepte zur Erzeugung von Durchführung von indirekten Plasmabehandlungen bekannt, in denen die elektrischen Entladungen im Gasstrom außerhalb einer Düse stattfinden und ebenfalls eine Plasmastrahlbehandlung bereitstellen.

Ebenso bekannt sind homogene Atmosphärendruckplasmen bei denen die Behandlung im Entladungsraum stattfindet, bezeichnet als homogene Glimmentladung bei Atmosphärendruck (englisch "glow discharge plasma", siehe zum Beispiel T Yokoyama et al 1990 J. Phys. D: Appl. Phys. 23 1125).

Bestandteile des Atmosphärendruckplasmas können sein:
- Hochangeregte atomare Zustände
- Hochangeregte molekulare Zustände
- Ionen
- Elektronen
- Unveränderte Bestandteile des Prozessgases

Bevorzugt ist der Einsatz marktüblicher Systeme zur Erzeugung von Atmosphärendruckplasma. Die elektrischen Entladungen können zwischen Metallelektroden stattfinden, aber auch zwischen Metall-Dielektrikum oder aber erzeugt werden durch piezoelektrische Entladung oder weiteren Methoden. Einige beispielhafte kommerzielle Systeme sind Plasma-Jet (Plasmatreat GmbH, Deutschland), PlasmaBlaster (Tigres GmbH, Deutschland), Plasmabrush und Piezobrush (Reinhausen, Germany), Plasmaline (VITO, Belgien), oder ApJet (ApJet, Inc., USA). Die genannten Systeme operieren mit unterschiedlichen Prozessgasen wie Luft, Stickstoff oder Helium und unterschiedlichen resultierenden Gastemperaturen.

Bevorzugt ist das Verfahren der Plasmatreat GmbH (Steinhagen, Deutschland), beschrieben beispielsweise in folgendem Zitat aus der WO 2005/1 17507 A2:
"Aus dem Stand der Technik der EP 0 761 415 A1 und der EP 1 335 641 A1 ist eine Plasmaquelle bekannt, bei der mittels einer unter Anlegen einer hochfrequenten Hochspannung in einem Düsenrohr zwischen einer Stiftelektrode und einer Ringelektrode mittels einer nicht-thermischen Entladung aus dem Arbeitsgas ein Plasmastrahl erzeugt wird, der aus der Düsenöffnung austritt. Dieser nicht-thermische Plasmastrahl weist bei einer geeignet eingestellten Strömungsrate keine elektrischen Streamer auf, so dass nur der energiereiche, aber niedrig temperierte Plasmastrahl auf die Oberfläche eines Bauteils gerichtet werden kann. Streamer sind dabei die Entladungskanäle, entlang derer die elektrische Entladungsenergie während der Entladung verläuft. Zur Charakterisierung des Plasmastrahls kann auch die hohe Elektronentemperatur, die niedrige lonentemperatur und die hohe Gasgeschwindigkeit herangezogen werden."

Bei einer Coronaentladung nach obiger Definition bilden sich durch die angelegte hohe Spannung filamentäre Entladungskanäle mit beschleunigten Elektronen und Ionen. Insbesondere die leichten Elektronen treffen mit hoher Geschwindigkeit auf die Oberfläche mit Energien, die ausreichen, um die meisten Molekülbindungen aufzubrechen. Die Reaktivität der außerdem entstehenden reaktiven Gasbestandteile ist meist ein untergeordneter Effekt. Die aufgebrochenen Bindungsstellen reagieren dann mit Bestandteilen der Luft oder des Prozessgases weiter. Ein entscheidender Effekt ist die Bildung kurzkettiger Abbauprodukte durch Elektronenbeschuss. Bei Behandlungen höherer Intensität kann auch ein signifikanter Materialabbau entstehen.

Durch die Reaktion eines Plasmas mit der Substratoberfläche werden verstärkt die Plasmabestandteile direkt "eingebaut". Alternativ kann auf der Oberfläche ein angeregter Zustand oder eine offene Bindungsstelle erzeugt werden, die dann sekundär weiterreagieren, zum Beispiel mit Luftsauerstoff. Bei manchen Gasen wie Edelgasen ist keine chemische Bindung der Prozessgasatome oder -moleküle an das Substrat zu erwarten. Hier findet die Aktivierung des Substrats ausschließlich über Sekundärreaktionen statt.

Der wesentliche Unterschied ist also, dass bei der Plasmabehandlung keine direkte Einwirkung diskreter Entladungskanäle auf die Oberfläche stattfindet.

Die Wirkung der Plasmabehandlung wie hierin beschrieben findet bevorzugt homogen und schonend vor allem über reaktive Gasbestandteile statt. Bei einer indirekten Plasmabehandlung sind freie Elektronen möglicherweise vorhanden, aber nicht beschleunigt da die Behandlung außerhalb des erzeugenden elektrischen Feldes stattfindet.

Die Plasmabehandlung ist schonend und erlaubt gute Benetzbarkeiten bei langer Beständigkeit des Effekts. Sie ist also weniger zerstörend als eine Coronabehandlung, da keine diskreten Entladungskanäle auf die Oberflächen treffen. Es entstehen weniger kurzkettige Abbauprodukte, die eine Schicht mit negativem Einfluss auf der Oberfläche bilden können. Deswegen können oft bessere Benetzbarkeiten nach Plasmabehandlung gegenüber Corona erzielt werden bei längerer Beständigkeit des Effekts.

Die Erfinder vermuten, dass ein geringer Kettenabbau und die homogene Behandlung durch Verwendung einer Plasmabehandlung wesentlich zur Robustheit und Effektivität des gelehrten Verfahrens beitragen.

### Experimenteller Teil

Die nachfolgenden Beispiele dienen der Verdeutlichung der vorliegenden Erfindung, sollen aber keinesfalls als Einschränkung des Schutzbereichs verstanden werden.

Analog Beispiel 1 der WO 2015/062809 A1 werden Klebstofffilme KF-B-P1 und KF-A-P1 bereitgestellt, um reaktive Klebstofffilm-Systeme umfassend einen ersten reaktiven Klebstofffilm (A) und einen zweiten reaktiven Klebstofffilm (B) vorzubereiten. Vor einer Verklebung der Klebstofffilme mit dem jeweiligen Prüfkörper wird - soweit notwendig und in den Beispielen unten angegeben - eine Plasmabehandlung durchgeführt, sofern eine Oberflächenbehandlung für das jeweilige Experiment vorgesehen ist. Zur Plasmabehandlung wird ein Gerät der Firma Plasmatreat (OpenAir Plasma RD 1004) mittels Druckluft über eine lichtbogenähnliche Entladung aktiviert, bevor die zu behandelnde Oberfläche im aktivierten "after glow" bei einer Leistung von 1 kW, einem Behandlungsabstand von 12 mm und einer Geschwindigkeit von 5m/min behandelt werden kann.

Zur Bestimmung der Zugscherfestigkeiten wird wie in Beispiel 1 der WO 2015/062809 A1 verfahren, wobei als Prüfkörper Polypropylen der Firma Total Petrochemicals (Finalloy HXN-86) und Stahl ausgewählt werden.

Es werden insgesamt sechs Versuche durchgeführt und jeweils dreimal wiederholt, bei denen die folgenden Stanzling-Kombinationen A-B zum Einsatz kommen, um jeweils einen Polypropylen-Prüfkörper ("PP") mit einem Stahl-Prüfkörper oder einem Polypropylen-Prüfkörper zu verbinden. Die resultierenden Verbundkörper werden sodann hinsichtlich ihrer Klebkräfte untersucht. Hierbei gibt die Kennzeichnung "Stahl-(A)-(B)-PP" beispielsweise an, dass die Außenseite des ersten reaktiven Klebstofffilms (A) auf Stahl aufgebracht wurde, und dass die Außenseite des Klebstofffilms (B) mit dem Polypropylen-Prüfkörper in Kontakt steht. Die Kennzeichnung "*" in den nachfolgenden Verbundkörpern gibt beispielsweise an, dass die mit dem Klebstofffilm verbundene Seite des Polypropylen-Prüfkörper ("PP*") plasmabehandelt ist. Analog steht die Bezeichnung (A*) oder (B*) für eine Plasmabehandlung der Außenseiten des jeweiligen Klebstofffilms:
(1) PP-(A)-(B)-PP
(2) PP-(A*)-(B)-Stahl
(3) PP*-(A*)-(B)-PP*
(4) PP*-(A*)-(B*)-PP*
(5) PP*-(A*)-(B)- (A*)-PP*
(6) Stahl-(A)-(B*)-PP*

In den Versuchen (4) und (5) werden reine Substratbrüche des Polypropylen-Prüfkörpers beobachtet. In den Versuchen (2) und (6) werden Adhäsionsbrüche im Bereich der Verklebungen (B)-Stahl bzw. Stahl-(A) beobachtet. In Versuch (1) kommt es zu einem Versagen der Bindung zwischen den Polypropylen-Prüfkörpern und den Klebstofffilmen (A) und (B). Eine Verklebung bildet sich in diesem Beispiel also gar nicht aus. Entsprechend versagt auch die Bindung (B)-PP* in Beispiel (3).

## Patentansprüche

1. Reaktives Klebstofffilm-System, umfassend
wenigstens einen ersten reaktiven Klebstofffilm (A), mit (a) einer polymeren Filmbildner-Matrix, (b) mindestens einem reaktiven Monomer oder Reaktivharz und (c) einem Initiator, insbesondere Radikalinitiator; und
wenigstens einem zweiten reaktiven Klebstofffilm (B), mit (a) einer polymeren Filmbildner-Matrix, (b) mindestens einem reaktiven Monomer oder Reaktivharz und (c) einem Aktivator;
wobei der erste und der zweite reaktive Klebstofffilm jeweils eine Außenseite und eine Innenseite aufweisen und die Innenseite eines ersten reaktiven Klebstofffilms mit der Innenseite eines zweiten reaktiven Klebstofffilms in Kontakt steht oder in Kontakt gebracht werden kann;
und wobei die Außenseite wenigstens eines ersten und/oder eines zweiten reaktiven Klebstofffilms plasmabehandelt ist.

2. Reaktives Klebstofffilm-System nach Anspruch 1, **dadurch gekennzeichnet, dass** die polymere Filmbildner-Matrix (a) in dem ersten und/oder dem zweiten reaktiven Klebstofffilm ein thermoplastisches Polymer, vorzugsweise ein thermoplastisches Polyurethan, oder ein Elastomer oder ein thermoplastisches Elastomer ist; und/oder dass
das reaktive Monomer (b) in dem ersten und/oder dem zweiten reaktiven Klebstofffilm mindestens einen Vertreter, ausgewählt aus Acrylsäure, Acrylsäureester, Methacrylsäure, Methacrylsäureester, Vinylverbindungen und/oder oligomere oder polymere Verbindungen mit Kohlenstoff-Kohlenstoff-Doppelbindungen, vorzugsweise Methylmethacrylat, Methacrylsäure, Cyclohexylmethacrylat, Tetrahydrofurfurylmethacrylat, 2-Phenoxyethylmethacrylat, Di(ethylenglykol)methylethermethacrylat und/oder Ethylenglykoldimethacrylat, umfasst.

3. Reaktives Klebstofffilm-System nach einem der vorhergehenden Ansprüche, **dadurch gekennzeichnet, dass**
der erste und/oder der zweite reaktive Klebstofffilm haftklebrige Eigenschaften besitzt.

4. Reaktives Klebstofffilm-System nach einem der vorhergehenden Ansprüche, **dadurch gekennzeichnet, dass**
der Radikalinitiator ein Peroxid, vorzugsweise Dimethylbenzylhydroperoxid, ist.

5. Reaktives Klebstofffilm-System nach einem der vorhergehenden Ansprüche, **dadurch gekennzeichnet, dass**
der Aktivator ein Amin, ein Dihydropyridin-Derivat, ein Übergangsmetallsalz oder ein Übergangsmetallkomplex, vorzugsweise 3,5-Diethyl-1,2-dihydro-1-phenyl-2-propylpyridin, ist.

6. Reaktives Klebstofffilm-System nach Anspruch 5, **dadurch gekennzeichnet, dass** der Aktivator einen Übergangsmetallkomplex ausgewählt aus der Gruppe bestehend aus einem Mangan(II)-Komplex, einem Eisen(II)-Komplex oder einem Kobalt(II)-Komplex, jeweils mit einer Verbindung, ausgewählt aus Porphyrin, Porphyrazin oder Phthalocyanin oder einem Derivat einer dieser Verbindungen als Ligand, umfasst.

7. Reaktives Klebstofffilm-System nach einem der vorhergehenden Ansprüche,
wobei der erste reaktive Klebstofffilm (A) umfasst: 20-80 Gew. % polymere Filmbildner-Matrix (a), 20-80 Gew. % mindestens eines reaktiven Monomers (b) und 3-30 Gew. % Radikalinitiator (c), vorzugsweise 30-50 Gew. % polymere Filmbildner-Matrix (a), 40-60 Gew. % mindestens eines reaktiven Monomers (b) und 8-15 Gew. % Radikalinitiator (c).

8. Reaktives Klebstofffilm-System nach einem der vorhergehenden Ansprüche,
wobei der zweite reaktive Klebstofffilm (B) umfasst: 20-80 Gew. % polymere Filmbildner-Matrix (a), 20-80 Gew. % mindestens eines reaktiven Monomers (b) und größer 0 bis 40 Gew. % Aktivator (c), vorzugsweise 30-50 Gew. % polymere Filmbildner-Matrix (a), 40-60 Gew. % mindestens eines reaktiven Monomers (b) und 0,5-25 Gew. % Aktivator (c).

9. Reaktives Klebstofffilm-System nach einem der vorhergehenden Ansprüche, umfassend zwei oder mehrere erste reaktive Klebstofffilme (A) und/oder zwei oder mehrere zweite reaktive Klebstofffilme (B) wobei die ersten und die zweiten reaktiven Klebstofffilme jeweils abwechselnd vorliegen.

10. Reaktives Klebstofffilm-System nach einem der vorhergehenden Ansprüche, umfassend Trennpapier und/oder Trennliner.

11. Verwendung eines reaktiven Klebstofffilm-Systems nach einem der vorhergehenden Ansprüche zur Verklebung von Materialien aus Metall, Holz, Glas und/oder Kunststoffen, bevorzugt zur Verklebung von Materialien mit unpolaren Oberflächen, besonders bevorzugt zur Verklebung von Polyethylen oder Polypropylen.

12. Verwendung nach Anspruch 11 zur Verklebung von Materialien mit unpolaren Oberflächen, bevorzugt Polyethylen oder Polypropylen, wobei die zu verklebende unpolare Oberfläche ebenfalls plasmabehandelt ist.

13. Verbundkörper, der durch das reaktive Klebstofffilm-System nach einem der Ansprüche 1 bis 10 verbunden ist.

14. Verbundkörper nach Anspruch 13, bei dem die plasmabehandelte Außenseite des wenigstens einen reaktiven Klebstofffilms mit einer plasmabehandelten unpolaren Oberfläche, bevorzugt mit einer plasmabehandelten Polyethylen- oder Polypropylen-Oberfläche in Kontakt steht.

15. Verfahren zur Herstellung eines reaktiven Klebstofffilm-Systems nach einem der Ansprüche 1 bis 10, wobei das Verfahren die folgenden Schritte umfasst:
(i) das Bereitstellen wenigstens eines ersten reaktiven Klebstofffilms (A) mit (a) einer polymeren Filmbildner-Matrix, (b) mindestens einem reaktiven Monomer oder Reaktivharz und (c) einem Initiator, insbesondere Radikalinitiator;
(ii) das Bereitstellen wenigstens eines zweiten reaktiven Klebstofffilms (B), mit (a) einer polymeren Filmbildner-Matrix, (b) mindestens einem reaktiven Monomer oder Reaktivharz und (c) einem Aktivator; sowie
(iii) das Plasmabehandeln und/oder Coronabehandeln einer Außenseite wenigstens eines ersten reaktiven Klebstofffilms (A) und/oder eines zweiten reaktiven Klebstofffilms (B).

16. Verfahren nach Anspruch 15, wobei die Schritte (i) und (ii) des Bereitstellens der reaktiven Klebstofffilme (A) und (B) die folgenden Unterschritte umfassen:
a. Auflösen und/oder Feinverteilen der Inhaltsstoffe in einem oder mehreren Lösemittel(n) und/oder Wasser,
b. Mischen der aufgelösten oder feinverteilten Inhaltsstoffe,
c. Beschichten eines Trennliners oder -papiers, eines Trägermaterials oder eines Haftklebstoffs mit der Mischung aufgelöster oder verteilter Inhaltsstoffe nach Schritt b,
d. Verdunsten des Lösemittels und/oder Wassers und
e. Gegebenenfalls Aufwickeln des reaktiven Klebstofffilms zu einer Rolle,
wobei die Inhaltsstoffe in Schritt (i) eine polymere Filmbildner-Matrix (a), mindestens ein reaktives Monomer oder Reaktivharz (b), sowie einen Initiator, insbesondere einen Radikalinitiator (c) sowie gegebenenfalls weitere Additive und/oder Hilfsstoffe umfassen; und wobei die Inhaltsstoffe in Schritt (ii) eine polymere Filmbildner-Matrix (a), mindestens ein reaktives Monomer oder Reaktivharz (b), sowie einen Aktivator (c), sowie gegebenenfalls weitere Additive und/oder Hilfsstoffe umfassen.

17. Verfahren nach einem der Ansprüche 15 und 16, wobei Schritt (iii) mit Atmosphärendruckplasma durchgeführt wird.

## Claims

1. Reactive adhesive film system, comprising
at least one first reactive adhesive film (A), with (a) a polymeric film-forming matrix, (b) at least one reactive monomer or reactive resin, and (c) an initiator, in particular a radical initiator; and
at least one second reactive adhesive film (B), with (a) a polymeric film-forming matrix, (b) at least one reactive monomer or reactive resin, and (c) an activator; wherein the first and the second reactive adhesive film each have an outer side and an inner side, and the inner side of a first reactive adhesive film is in contact or can be brought into contact with the inner side of a second reactive adhesive film;
and wherein the outer side of at least one first and/or second reactive adhesive film is plasma-treated.

2. Reactive adhesive film system according to Claim 1, **characterized in that**
the polymeric film-forming matrix (a) in the first and/or the second reactive adhesive film is a thermoplastic polymer, preferably a thermoplastic polyurethane, or an elastomer or a thermoplastic elastomer; and/or **in that** the reactive monomer (b) in the first and/or the second reactive adhesive film comprises at least one representative selected from acrylic acid, acrylic acid ester, methacrylic acid, methacrylic acid ester, vinyl compounds, and/or oligomeric or polymeric compounds with carbon-carbon double bonds, preferably methylmethacrylate, methacrylic acid, cyclohexyl methacrylate, tetrahydrofurfuryl methacrylate, 2-phenoxyethyl methacrylate, di(ethylene glycol)methyl ether methacrylate and/or ethylene glycol dimethacrylate.

3. Reactive adhesive film system according to one of the preceding claims, **characterized in that** the first and/or the second reactive adhesive film has pressure-sensitive properties.

4. Reactive adhesive film system according to one of the preceding claims, **characterized in that** the radical initiator is a peroxide, preferably dimethylbenzylhydroperoxide.

5. Reactive adhesive film system according to one of the preceding claims, **characterized in that** the activator is an amine, a dihydropyridine derivative, a transition metal salt, or a transition metal complex, preferably 3,5-diethyl-1,2-dihydro-1-phenyl-2-propylpyridine.

6. Reactive adhesive film system according to Claim 5, **characterized in that**
the activator comprises as a ligand a transition metal complex selected from the group of a manganese(II) complex, an iron(II) complex, or a cobalt(II) complex, in each case with a compound selected from porphyrin, porphyrazine, or phthalocyanine or a derivative of one of these compounds.

7. Reactive adhesive film system according to one of the preceding claims,
wherein the first reactive adhesive film (A) comprises: 20-80 wt.% of polymeric film-forming matrix (a), 20-80 wt.% of at least one reactive monomer (b), and 3-30 wt.% of radical initiator (c), preferably 30-50 wt.% of polymeric film-forming matrix (a), 40-60 wt.% of at least one reactive monomer (b), and 8-15 wt.% of radical initiator (c).

8. Reactive adhesive film system according to one of the preceding claims,
wherein the second reactive adhesive film (B) comprises: 20-80 wt.% of polymeric film-forming matrix (a), 20-80 wt.% of at least one reactive monomer (b), and more than 0 to 40 wt.% of activator (c), preferably 30-50 wt.% of polymeric film-forming matrix (a), 40-60 wt.% of at least one reactive monomer (b), and 0.5-25 wt.% of activator (c) .

9. Reactive adhesive film system according to one of the preceding claims, comprising two or more first reactive adhesive films (A) and/or two or more second reactive adhesive films (B), wherein the first and the second reactive adhesive films are present in each case in an alternating manner.

10. Reactive adhesive film system according to one of the preceding claims, comprising release paper and/or release liner.

11. Use of a reactive adhesive film system according to one of the preceding claims for the bonding of materials selected from metal, wood, glass. and/or plastics, preferably for the bonding of materials with nonpolar surfaces, and particularly preferably for the bonding of polyethylene or polypropylene.

12. Use according to Claim 11 for the bonding of materials with nonpolar surfaces, preferably polyethylene or polypropylene, wherein the nonpolar surface to be bonded is also plasma-treated.

13. Composite, bonded by means of the reactive adhesive film system according to one of Claims 1 to 10.

14. Composite according to Claim 13, in which the plasma-treated outer side of the at least one reactive adhesive film is in contact with a plasma-treated nonpolar surface, preferably a plasma-treated polyethylene or polypropylene surface.

15. Method for the production of a reactive adhesive film system according to one of Claims 1 to 10, wherein the method comprises the following steps:
(i) provision of at least one first reactive adhesive film (A) with (a) a polymeric film-forming matrix, (b) at least one reactive monomer or reactive resin, and (c) an initiator, in particular a radical initiator;
(ii) provision of at least one second reactive adhesive film (B), with (a) a polymeric film-forming matrix, (b) at least one reactive monomer or reactive resin, and (c) an activator; and
(iii) plasma and/or corona treatment of an outer side of at least one first reactive adhesive film (A) and/or second reactive adhesive film (B).

16. Method according to Claim 15, wherein the steps (i) and (ii) of providing the reactive adhesive films (A) and (B) comprise the following substeps:
a. dissolving and/or fine dispersion of the ingredients in one or a plurality of solvent(s) and/or water,
b. mixing of the dissolved or finely dispersed ingredients,
c. coating of a release liner or paper, a substrate material, or a pressure-sensitive adhesive with the mixture of dissolved or dispersed ingredients of step b,
d. evaporation of the solvent and/or water, and
e. optionally, winding of the reactive adhesive film into a roll,
wherein the ingredients in step (i) comprise a polymeric film-forming matrix (a), at least one reactive monomer or reactive resin (b), and an initiator, particularly a radical initiator (c), and optionally further additives and/or auxiliary materials; and wherein the ingredients in step (ii) comprise a polymeric film-forming matrix (a), at least one reactive monomer or reactive resin (b), and an activator (c), and optionally further additives and/or auxiliary materials.

17. Method according to one of Claims 15 and 16, wherein step (iii) is carried out with plasma at atmospheric pressure.

## Revendications

1. Système de film adhésif réactif, comprenant au moins un premier film adhésif réactif (A), doté (a) d'une matrice filmogène polymérique, (b) d'au moins un monomère réactif ou d'une résine réactive et (c) d'un initiateur, en particulier d'un initiateur de radicaux ; et
au moins un deuxième film adhésif réactif (B), doté (a) d'une matrice filmogène polymérique, (b) d'au moins un monomère réactif ou d'une résine réactive et (c) d'un activateur ;
le premier et le deuxième film adhésif réactif présentant à chaque fois un côté extérieur et un côté intérieur et le côté intérieur d'un premier film adhésif réactif étant en contact ou pouvant être mis en contact avec le côté intérieur d'un deuxième film adhésif réactif ;
et le côté extérieur d'au moins un premier et/ou un deuxième film adhésif réactif étant traité au plasma.

2. Système de film adhésif réactif selon la revendication 1, **caractérisé en ce que** la matrice filmogène polymérique (a) dans le premier et/ou le deuxième film adhésif réactif est un polymère thermoplastique, de préférence un polyuréthane thermoplastique, ou un élastomère ou un élastomère thermoplastique ; et/ou **en ce que**
le monomère réactif (b) dans le premier et/ou le deuxième film adhésif réactif comprend au moins un représentant choisi parmi l'acide acrylique, un ester d'acide acrylique, l'acide méthacrylique, un ester d'acide méthacrylique, des composés vinyliques et/ou des composés oligomériques ou polymériques comportant des doubles liaisons carbone-carbone, de préférence le méthacrylate de méthyle, l'acide méthacrylique, le méthacrylate de cyclohexyle, le méthacrylate de tétrahydrofurfuryle, le méthacrylate de 2-phénoxyéthyle, le méthacrylate de l'éther méthylique de diéthylèneglycol et/ou le diméthacrylate d'éthylèneglycol.

3. Système de film adhésif réactif selon l'une quelconque des revendications précédentes, **caractérisé en ce que** le premier et/ou le deuxième film adhésif réactif possède des propriétés autoadhésives.

4. Système de film adhésif réactif selon l'une quelconque des revendications précédentes, **caractérisé en ce que** l'initiateur de radicaux est un peroxyde de préférence l'hydroperoxyde de diméthylbenzyle.

5. Système de film adhésif réactif selon l'une quelconque des revendications précédentes, **caractérisé en ce que** l'activateur est une amine, un dérivé de dihydropyridine, un sel de métal de transition ou un complexe de métal de transition, de préférence la 3,5-diéthyl-1,2-dihydro-1-phényl-2-propylpyridine.

6. Système de film adhésif réactif selon la revendication 5, **caractérisé en ce que** l'activateur comprend un complexe de métal de transition choisi dans le groupe constitué par un complexe de manganèse(II), un complexe de fer(II) et un complexe de cobalt (II), à chaque fois avec un composé choisi parmi une porphyrine, une porphyrazine et une phtalocyanine et un dérivé d'un de ces composés en tant que ligand.

7. Système de film adhésif réactif selon l'une quelconque des revendications précédentes, le premier film adhésif réactif (A) comprenant : 20 à 80 % en poids de matrice filmogène polymérique (a), 20 à 80 % en poids d'au moins un monomère réactif (b) et 3 à 30 % en poids d'initiateur de radicaux (c), de préférence 30 à 50 % en poids de matrice filmogène polymérique (a), 40 à 60 % en poids d'au moins un monomère réactif (b) et 8 à 15 % en poids d'initiateur de radicaux (c).

8. Système de film adhésif réactif selon l'une quelconque des revendications précédentes, le deuxième film adhésif réactif (B) comprenant : 20 à 80 % en poids de matrice filmogène polymérique (a), 20 à 80 % en poids d'au moins un monomère réactif (b) et plus de 0 à 40 % en poids d'activateur (c), de préférence 30 à 50 % en poids de matrice filmogène polymérique (a), 40 à 60 % en poids d'au moins un monomère réactif (b) et 0,5 à 25 % en poids d'activateur (c).

9. Système de film adhésif réactif selon l'une quelconque des revendications précédentes, comprenant deux premiers films adhésifs réactifs (A) ou plus et/ou deux deuxièmes films adhésifs réactifs (B) ou plus, les premiers et deuxièmes films adhésifs réactifs étant présents à chaque fois en alternance.

10. Système de film adhésif réactif selon l'une quelconque des revendications précédentes, comprenant un papier de séparation et/ou une doublure de séparation.

11. Utilisation d'un système de film adhésif réactif selon l'une quelconque des revendications précédentes pour le collage de matériaux composés de métal, de bois, de verre et/ou de plastiques, préférablement pour le collage de matériaux dotés de surfaces non polaires, particulièrement préférablement pour le collage de polyéthylène ou de polypropylène.

12. Utilisation selon la revendication 11 pour le collage de matériaux dotés de surfaces non polaires, préférablement de polyéthylène ou de polypropylène, la surface non polaire devant être collée étant également traitée au plasma.

13. Corps composite, qui est relié par le système de film adhésif réactif selon l'une quelconque des revendications 1 à 10.

14. Corps composite selon la revendication 13, dans lequel le côté extérieur traité au plasma de l'au moins un film adhésif réactif est en contact avec une surface non polaire traitée au plasma, préférablement avec une surface traitée au plasma de polyéthylène ou de polypropylène.

15. Procédé pour la préparation d'un système de film adhésif réactif selon l'une quelconque des revendications 1 à 10, le procédé comprenant les étapes suivantes :
(i) la mise à disposition d'au moins un premier film adhésif réactif (A) doté (a) d'une matrice filmogène polymérique, (b) d'au moins un monomère réactif ou d'une résine réactive et (c) d'un initiateur, en particulier d'un initiateur de radicaux ;
(ii) la mise à disposition d'au moins un deuxième film adhésif réactif (B), doté (a) d'une matrice filmogène polymérique, (b) d'au moins un monomère réactif ou d'une résine réactive et (c) d'un activateur ; ainsi que
(iii) le traitement au plasma et/ou le traitement corona d'un côté extérieur d'au moins un premier film adhésif réactif (A) et/ou un deuxième film adhésif réactif (B).

16. Procédé selon la revendication 15, les étapes (i) et (ii) de la mise à disposition des films adhésifs réactifs (A) et (B) comprenant les sous-étapes suivantes :
a. dissolution et/ou dispersion fine des ingrédients dans un ou plusieurs solvant(s) et/ou de l'eau,
b. mélange des ingrédients dissous ou dispersés finement,
c. revêtement d'une doublure de séparation ou d'un papier de séparation, d'un matériau de support ou d'un autoadhésif avec le mélange d'ingrédients dissous ou dispersés après l'étape b,
d. évaporation du solvant et/ou de l'eau et
e. éventuellement, enroulement du film adhésif réactif pour donner un rouleau,
les ingrédients dans l'étape (i) comprenant une matrice filmogène polymérique (a), au moins un monomère réactif ou une résine réactive (b), ainsi qu'un initiateur, en particulier un initiateur de radicaux (c) ainsi qu'éventuellement d'autres additifs et/ou auxiliaires ; et les ingrédients dans l'étape (ii) comprenant une matrice filmogène polymérique (a), au moins un monomère réactif ou une résine réactive (b), ainsi qu'un activateur (c), ainsi qu'éventuellement d'autres additifs et/ou auxiliaires.

17. Procédé selon l'une quelconque des revendications 15 et 16, l'étape (iii) étant mise en œuvre avec un plasma à pression atmosphérique.
